# EUROPÄISCHE PATENTSCHRIFT

(11) **EP 3 556 436 B1**
(45) Veröffentlichungstag und Bekanntmachung des Hinweises auf die Patenterteilung: **14.10.2026**
(21) Anmeldenummer: 19174224.6
(22) Anmeldetag: 25.08.2015
(51) Int. Cl.: A62B 7/02, A62B 7/10, A62B 9/00, A62B 9/04, A62B 19/00, A62B 23/02, B01J 20/34, A42B 3/28, B05B 7/24

(54) **AKTIVKOHLEABSORBER**
ACTIVATED CARBON ABSORBER
ABSORBEUR À CHARBON ACTIF

(30) Priorität: 26.08.2014 CN 201420486205 U; 26.08.2014 CN 201420486333 U; 26.08.2014 CN 201420486170 U
(43) Veröffentlichungstag der Anmeldung: 23.10.2019
(62) Dokumentnummer(n) der früheren Anmeldung(en) nach Art. 76 EPÜ: 15787129.4 / 3 185 968
(73) Patentinhaber: SATA GmbH & Co. KG, 70806 Kornwestheim (DE)
(72) Erfinder: Brose, Jens, 74354 Ottmarsheim (DE); Gehrung, Ralf, 71522 Backnang (DE); Schönemann, Marco, 73240 Wendlingen (DE)

(56) Entgegenhaltungen:
- WO-A1-01/97914
- WO-A1-2006/108042
- WO-A2-2014/012064
- DE-A1- 102013 000 809
- US-A- 2 085 249
- US-A- 4 899 740
- US-A- 5 724 963
- US-A1- 2003 160 075
- US-A1- 2013 206 139
- US-A1- 2014 123 978

## Beschreibung

### TECHNISCHES GEBIET

Die vorliegende Erfindung betrifft einen Aktivkohleadsorber, insbesondere einem Aktivkohleadsorber zur Verwendung durch einen Benutzer einer fremdbelüfteten Atemschutzmaske oder Atemschutzhaube.

### TECHNISCHER HINTERGRUND

### Technologischer Hintergrund

Während Lackierverfahren, die mittels Spritzpistolen, die mit Druckluft und unter Verwendung von Lösungsmitteln betrieben werden, es unvermeidlich, dass ein sogenannter "Overspray" anfällt. Das heißt, dass der Betriebsraum mit einer unerwünschten Menge von Farbe oder Lacktröpfchen belastet wird, was auch sehr schädlich für den menschlichen Körper ist. Aus diesem Grund ist ein Gesundheitsschutz für den Arbeiter notwendig. Atemschutzhauben, die vorzugsweise über dem gesamten Kopf und insbesondere vor dem gesamten Gesichtsbereich des Arbeiters befestigt werden können, sind für diesen Zweck hervorragend geeignet und bieten ein Maximum an Gesundheitsschutz. Solche Atemschutzhauben werden üblicherweise von der Umgebungsluft unabhängig druckluftgespeist. Dazu wird Druckluft zunächst in aller Regel einem Luftaufbereitungssystem, das als erstes ein einstufiges oder ein mehrstufiges Filtersystem umfasst, zugeführt. Die gefilterte Luft wird dann über einen Druckluftschlauch einem Taillenband bzw. Hüftgurt zugeführt, das in der Regel mit mindestens einem weiteren Luftaufbereitungsmodul ausgestattet ist. Ein Luftaufbereitungsmodul kann ein Aktivkohleadsorber, wie der von WO 01/97914 A1 sein, ein anderes Luftaufbereitungsmodul kann ein Lufterwärmer oder ein Luftbefeuchter sein. Mit Hilfe des Aktivkohleadsorbermoduls können unerwünschte Dämpfe und Gase entfernt werden, die noch in der Druckluft enthalten sein können. Und durch ein Luftwärmermodul und / oder einem Luftbefeuchtermodul können weitere Vorteile für die Gesundheit und das Wohlbefinden erreicht werden. Eine weitere vorteilhafte Ausführungsform besteht darin, ein Luftregel- und verteilermodul auf dem Taillenband bzw. Hüftgurt zu befestigen. Das gesamte Gebilde wird üblicherweise als Gurteinheit bezeichnet. Eine derartige vorteilhafte Gurteinheit ist zur Verwendung bei einer Atemschutzhaube mit dem Produktnamen "Vision 2000" der SATA GmbH & Co. KG bekannt. Vorrichtungen, die eine externe Druckluftquelle nutzen, sind aus US 5 724 963 A und US 2014/123978 A1 bekannt, wobei die erste Vorrichtung auch den Anschluss eines Handwerkzeugs ermöglicht. Die Vorrichtung aus US 2 085 249 A stellt dem Benutzer jedoch nur drei redundante Luftquellen zur Verfügung, ohne ihm Zugang zu Druckluft für den Antrieb eines Handwerkzeugs zu geben.

Heutzutage stellen die Anwender von Atemschutzsystemen erhöhte Anforderungen an die Gewährleistung von Gesundheitsschutz sowie an die Benutzerfreundlichkeit. Andererseits möchten die Hersteller und Zulieferer Produkte, die möglichst einfach produzierbar, leicht montierbar und falls erforderlich, wieder leicht demontierbar sind.

### Aufgabe der Erfindung

Aufgabe der Erfindung ist es, die Benutzerfreundlichkeit eines Aktivkohleadsorbers zu verbessern.

### Lösung der Aufgabe der Erfindung

Die Aufgabe der Erfindung wird durch eine Aktivkohleeinheit mit den Merkmalen des Anspruchs 1 gelöst. Das erfindungsgemäße Gehäuse des Aktivkohleadsorber-Moduls ist einfach bestückbar, montierbar, handhabbar und demontierbar.

### Kurze Beschreibung der Zeichnungen

Die beigefügten Zeichnungen bilden einen Teil der vorliegenden Beschreibung und werden zum weiteren Verständnis der vorliegenden Erfindung bereitgestellt. Sie veranschaulichen mögliche Ausführungsformen der vorliegenden Erfindung und dienen dazu, die Prinzipien der vorliegenden Erfindung zusammen mit der Beschreibung zu erläutern. In den beigefügten Zeichnungen sind gleiche Bauteile mit den gleichen Bezugszeichen bezeichnet.

In den Zeichnungen ist Folgendes dargestellt:
Fig. 1A veranschaulicht den vorderen Teil des Aktivkohleadsorbers,
Fig. 1B veranschaulicht die Rückseite des Aktivkohleadsorbers;
Fig. 2A zeigt eine Montagezeichnung des Aktivkohleadsorbers mit seiner Befestigungseinheit,
Fig. 2B zeigt eine weitere Ansicht der Montagezeichnung,
Fig. 3A veranschaulicht die Befestigungseinheit näher,
Fig. 3B zeigt eine andere Ansicht der Befestigungseinheit,
Fig. 4 zeigt die Befestigung des Aktivkohleadsorbers an einem Hüftgurt,
Fig. 5 zeigt die Ansicht des Abnehmens des Aktivkohleadsorbers von dem Hüftgurt,
Fig. 6A ~ 6B zeigen den Aktivkohleadsorber in fünf verschiedenen Drehwinkelposition nach einem Ausführungsbeispiel der vorliegenden Erfindung,

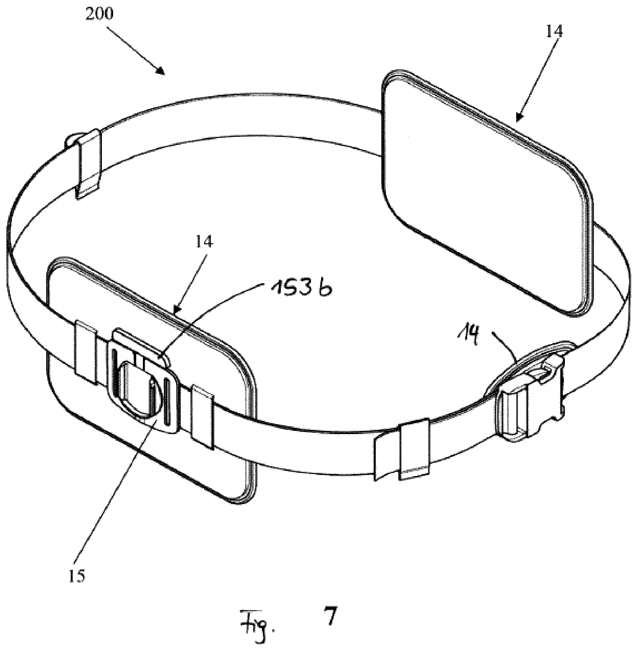

Fig. 7 zeigt den Hüftgurt einzeln,
   und
Fig. 8 zeigt eine Ausführungsform des Aktivkohleadsorbers nach der vorliegenden Erfindung.

### Ausführliche Beschreibung der Ausführungsformen

Die folgende detaillierte Beschreibung ist unter Bezugnahme auf die Zeichnungen zu verstehen, die einen Teil der Beschreibung bilden und eine beispielhafte Darstellung der Möglichkeiten aufzeigen, welche die Erfindung bietet. In den Zeichnungen sind Richtungsangaben wie oben, unten, innen und außen mit Bezug auf die beschriebenen Zeichnungen zu verstehen. Komponenten der Ausführungsformen der Erfindung können in mehreren unterschiedlichen Richtungen angeordnet sein, so dass die Richtungsangaben nur zur Veranschaulichung verwendet werden und dadurch keine Grenzen implizieren sein sollen. Die Beschreibung sollte auch so verstanden werden, dass anderen Ausführungsformen gewählt werden können und strukturelle oder logische Veränderungen basieren auf der Prämisse, dass sie entsprechend dem Umfang der Erfindung gestattet sind. Deshalb sollte die folgende detaillierte Beschreibung nicht als Einschränkung zu verstehen sein.

Der erfindungsgemäße Aktivkohleadsorber 100 ist zur Verwendung durch einen Benutzer einer fremdbelüfteten Atemschutzmaske oder Atemschutzhaube bestimmt.

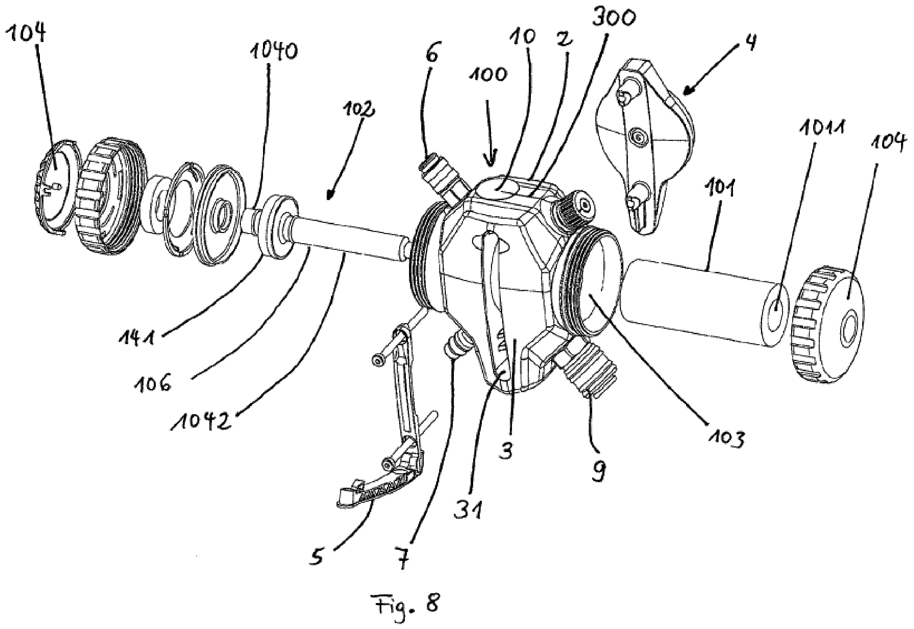

Wie in Fig. 8 zu sehen ist, weist der erfindungsgemäße Aktivkohleadsorber 100 eine Filterpatrone 101 auf, die in einem speziellen Gehäuse 2,3 angeordnet ist. Das Gehäuse2, 3 ist aus zwei hohlen Halbkugeln bzw. Halbschalen 2 und 3 zusammengesetzt. Die Halbschalen 2, 3 sind entlang einer Nahtlinie 300 miteinander verbunden. Die Verbindung kann eine lösbare oder eine unlösbare Verbindung sein. Klips-, Klebe oder Schweißverbindungen sind möglich.

Die Halbkugeln 2, 3 sind auf zwei einander gegenüberliegenden Seiten mit jeweils einer relativ großen Öffnung 103 versehen, von denen eine das Einsetzen und Entnehmen eines Aktivkohle enthaltenden Bauteils 101 und die andere das Einsetzen und Entnehmen einer Vorrichtung zum Temperaturausgleich ermöglicht. Jede Öffnung 103 ist durch eine Schraubkappe 104 verschließbar. In anderen Ausgestaltungen, bei denen keine Vorrichtung zum Temperaturausgleich oder ein anderes Modul in das Gehäuse 2, 3 des Aktivkohleadsorbers eingesetzt werden soll, reicht prinzipiell eine einzige Öffnung 103 aus.

Bei der dargestellten bevorzugten Ausführungsform der Erfindung ist die Aktivkohle in einer Filterpatrone 101 untergebracht, die als Rohr, und zwar als gerades, zylindrisches Rohr, ausgebildet ist. Die Kohlepartikel sind in den Wänden des Rohres 101 untergebracht, die an ihren Enden verschlossen sind. Der Außendurchmesser des Rohres 101 ist etwas kleiner als der Durchmesser der Öffnungen 103 und die Länge des Rohres 101 ist etwas kleiner als der Durchmesser der beiden Gehäusehalbkugeln 2, 3 bzw. der Gehäusekugel. Deshalb ist das Rohr 101 problemlos in die Öffnungen 103 einsetzbar.

In einer bevorzugten, in den Zeichnungen jedoch nicht dargestellten Variante ist das Rohr 101 an einem seiner beiden Enden mit einer Verschlussplatte ausgestattet, welche maßlich derart auf die Maße einer der beiden Öffnungen 103 im Gehäuse 2, 3 des Aktivkohleadsorbers 100 abgestimmt ist, dass die Öffnung 103 durch die Verschlussplatte verschlossen werden kann. Die Verschlussplatte kann Vorsprünge und/oder Vertiefungen als Handhaben und/oder Befestigungsmittel wie beispielsweise ein Gewinde aufweisen, das mit einem Gewinde an der Öffnung 103 und/oder an der Schraubkappe 104 zusammenwirken kann.

In der in Fig. 8 dargestellten erfindungsgemäßen Ausführungsform kann in den Hohlraum 1011 des Rohres 101 eine Vorrichtung zum Temperaturausgleich, resp. ein Luftwärmer / Luftkühlermodul 102 eingeführt werden, wenn gewünscht. Bei Anwesenheit der Temperaturausgleichsvorrichtung 102 erreicht die Atemluft den Handwerker mit einer mit einer komfortablen, für ihn angenehmen Temperatur, die er in der Winterzeit warm wählen wird, um sich nicht zu erkälten. In der Sommerzeit kann er die Lufttemperatur kühler wählen, um nicht zu stark zu schwitzen.

Wie in der Fig. 8 weiter angedeutet, umfasst die Temperaturausgleichsvorrichtung 102 einen zylindrischen Hohlkörper 106 aus Kunststoff mit einem Warmluftkanal 1042 und mit einem Kaltluftkanal 1040, wobei die Kanäle 1042 und 1040 in Längsrichtung des Hohlkörpers 106 aneinander anschließen und in Fluidverbindung stehen.

Der Innendurchmesser des Warmluftkanals 1042 ist kleiner als der des Kaltluftkanals 1040 gestaltet; die Länge des Warmluftkanals 1042 ist wesentlich größer als die des Kaltluftkanals 1040. Im vorliegenden Ausführungsbeispiel ist der Warmluftkanal 1042 etwa viermal so lang wie der Kaltluftkanal 1040.

Um die zentrale Achse des Körpers 106 erstreckt sich in radialer Richtung ein Luftführungselement bzw. Luftumleitungselement über einen großen Teil der Gesamtlänge des Warmluftkanals 1042. Das Luftumleitungselement kann aber auch in einer anderen geeigneten Form angeordnet werden. Im vorliegenden Ausführungsbeispiel besitzt das Luftführungselement auch einen sogenannten Stern. Am Kaltluftkanal 1040 ist als Luftführungselement ein kreisscheibenförmiges Luftdrallelement 141 angeordnet, und zwar einstückig angeformt. Der Innendurchmesser des Luftdrallelements 141 ist etwa doppelt so groß wie derjenige des Kaltluftkanals 1040.Das Luftdrallelement 141 ist im Inneren mit mehreren Wirbelelementen ausgestattet, die sich in radialer Richtung um die zentrale Achse des Körpers 106 erstrecken, wobei jedes Wirbelelement hohl ist. In der bevorzugten Ausführungsform endet das Luftdrallelement 141 in einer ringförmigen Platte 144, welche in der gezeigten bevorzugten Ausführungsform nicht am Kaltluftkanal 1040, sondern am Warmluftkanal 1042 befestigt, insbesondere einstückig an diesem Kanal 1042 angeformt ist. Die ringförmige Platte 144 besitzt einen geringfügig kleineren Durchmesser als die zylindrische Wand des Luftdrallelements 141. Der Warmluftkanal 1042 und der Kaltluftkanal 1040 sind im Bereich der ringförmigen Platte 144 miteinander verbunden; im vorliegenden Ausführungsbeispiel einfach ineinandergesteckt und halten mit Presssitz. Im Hinblick darauf, eine besonders gute Erwärmung und Kühlwirkung zu erzielen, beträgt der Innendurchmesser des Luftdrallelements 141 in etwa das Doppelte von demjenigen des Warmluftkanals 1042. Das Funktionsprinzip der Temperaturausgleichsvorrichtung gemäß der Erfindung entspricht einem Vortex- bzw. Wirbelrohr-Prinzip und braucht daher hier nicht näher erläutert werden. Die gezeigten und beschriebenen Längen-/Durchmesserverhältnisse von Warmluftkanal 1042 und Kaltluftkanal 1040 im Gesamtkörper 102 gewährleisten jedenfalls einen für den menschlichen Gebrauch sinnvollen Luft-Temperaturausgleich.

In einer bevorzugten Ausführungsform ist der Erfindung ist vorgesehen, den Aktivkohleadsorber 100 über eine spezielle Befestigungseinheit 4 und anschließend über einen speziellen Adapter 15 am Hüftgurt 200 zu befestigen. Eine solche Art von Befestigung bringt den Aktivkohleadsorber 100 in die Nähe einer der Hände des Benutzers und erhöht somit den Bedienkomfort sehr.

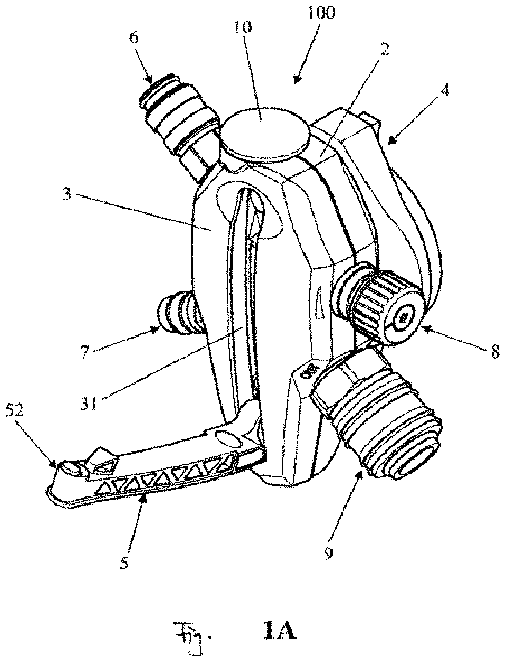

Das in den Fig. 1A, 1B, 2A, 2B, 4 und 5 zu sehende Gehäuse 2, 3 weicht zwar im Umriß und in gewissen Einzelheiten zwar vom Umriß und gewissen Einzelheiten des in Fig. 8 gezeigten Gehäuses 2, 3 ab. Wesentliche Einzelheiten stimmen jedoch überein, weswegen die Erfindung nachstehend auch anhand dieses Ausführungsbeispiels beschrieben wird.

Das Gehäuse 2, 3 auch dieses des Aktivkohleadsorbers umfasst demgemäß eine erste Halbschale 2 und eine zweite Halbschale 3. Beide Aktivkohleadsorber, d.h. derjenige nach den Fig. 1A, 1B, 2A, 2B, 4 und 5 sowie derjenige nach Fig. 8, können über ihr Gehäuse 2, 3 mittels der gleichen Befestigungseinheit 4 an einem Hüftgurt 200 angebracht werden und bei Bedarf wieder davon entfernt werden.

Der Aktivkohleadsorber 100 ist mit einem Lufteinlassverbinder 7 ausgestattet, über den Druckluft von einer externen Druckuftversorgung in den Aktivkoheladsorber 100 eingeführt werden kann. Ein Verbinder 6 für einen Schlauch oder dergleichen, welcher zu einer Atemschutzmaske oder -haube führt, ist auf der gleichen Seite des Gehäuses 2, 3 wie der Lufteinlassverbinder 7, jedoch oberhalb von diesem Lufteinlassverbinder 7 angeordnet. Weiterhin ist ein Anschluss 9 auf der anderen Seite des Aktivkohleadsorbers 100 angeordnet, der zur Ausgabe der Druckluft über einen Schlauch oder dergleichen zu einem druckluftbetriebenen Handwerkzeug wie einer Farbspritzpistole führt. Auf der gleichen Seite wie dieser Anschluss 9, jedoch oberhalb von diesem, befindet sich ein Regler 8, der dazu dient, um den Druck der Luft einstellen zu können, der zur Atemschutzmaske oder -haube führt. Aus Sicherheitsgründen ist der Regler 8 derart konfiguriert, dass der Aktivkohleadsorber 100 stets Luft mit einem vorbestimmten Druck an die Atemschutzmaske oder -haube liefert, selbst wenn der Regler 8 auf "minimal" eingestellt wird.

Der Verbinder 6 für den Anschluss mit der Atemschutzmaske oder -haube und / oder der Anschluss 9 für die Spritzpistole können bei Nichtverwendung des Aktivkohleadsorbers 100 durch einen Blinddeckel oder dergleichen verschlossen werden, wenn gewünscht.

Vorzugsweise kann der Aktivkohleadsorber 100 mit einer Druckanzeige verbunden werden (in den Figuren nicht dargestellt).

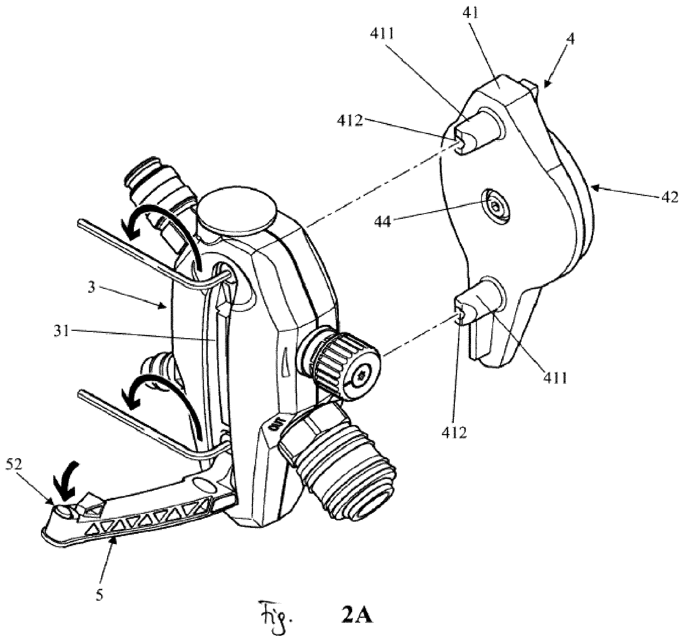

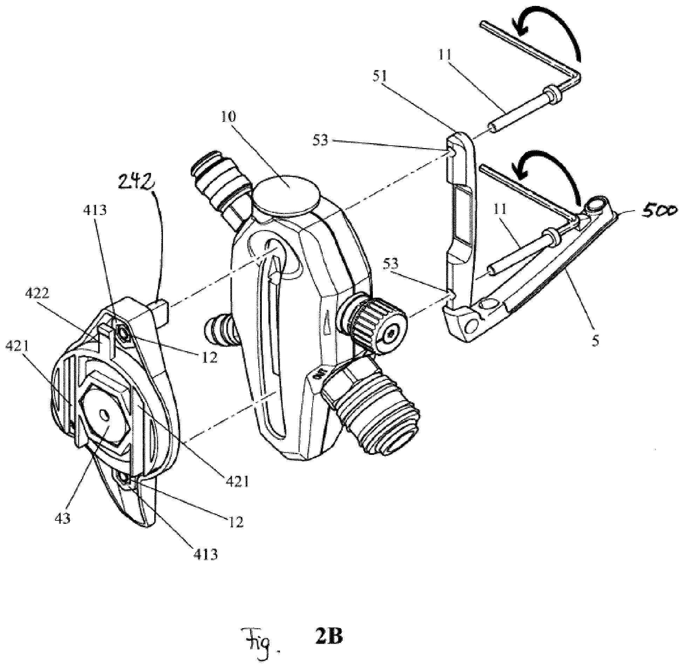

In der erfindungsgemäßen Ausführungsform, die in den wie in den Fig. 2A, 2A und 8 näher gezeigt ist, ist die zweite Halbschale 3 des Aktivkohleadsorbers 100 mit einem abklappbaren bzw. drehbaren Halter 5 versehen, an dem die Spritzpistole oder der Atemluftschlauch gehalten werden kann, wenn die Spritzpistole oder die Atemschutzmaske oder -haube nicht benutzt wird. Wie in Fig. 2B gezeigt, ist ein erster Arm des hier zweiarmig ausgebildeten Halters 5 an dem Aktivkohleadsorber 100 mittels einer Schraube 11 befestigt. Der andere, zweite Arm des Halters 5 ist gelenkig mit dem ersten Arm verbunden und steht ansonsten frei. Es kann gegenüber dem Aktivkohleadsorber 100 verdreht werden.

Wie in Fig. 2A angedeutet, kann der zweite Arm des Halters 5 in einem Winkel zwischen 20 ° bis 90 ° gedreht werden, vorzugsweise in einem Winkel von 70 °. Ferner ist ein erstes Verriegelungselement 52, vorzugsweise ein Magnet, am freien Ende des zweiten Arms des Halters 5 vorgesehen. Das Verriegelungselement 52 wirkt mit einem zweiten Verriegelungselement (vorzugsweise mit einem Magnet) zusammen, das an dem Aktivkohleadsorber 100 vorgesehen ist. Im vorliegenden Ausführungsbeispiel ist das zweite Verriegelungselement am Halter 5 im Bereich eines Plattensitzes 51 befestigt, welcher am oberen nicht freien Ende des ersten Armes des Halters 5 vorgesehen ist. Zusammenfassend kann der Halter 5 in eingeklappter Stellung bei Nichtgebrauch sicher an der Aktivkohleadsorber 100 gehalten werden. Und vorzugsweise ist, wie in den Fig.2A und 2B gezeigt ist, eine vertiefte Nut 31 in die zweite Halbschale 3 des Gehäuses eingelassen. Die Nut 31 ist maßlich derart auf den Halter 5 abgestimmt, dass der zweite Arm in eingeklappter Stellung bündig in der Nut 31 liegt, bis auf eine Handhabe 500 am oberen Ende.

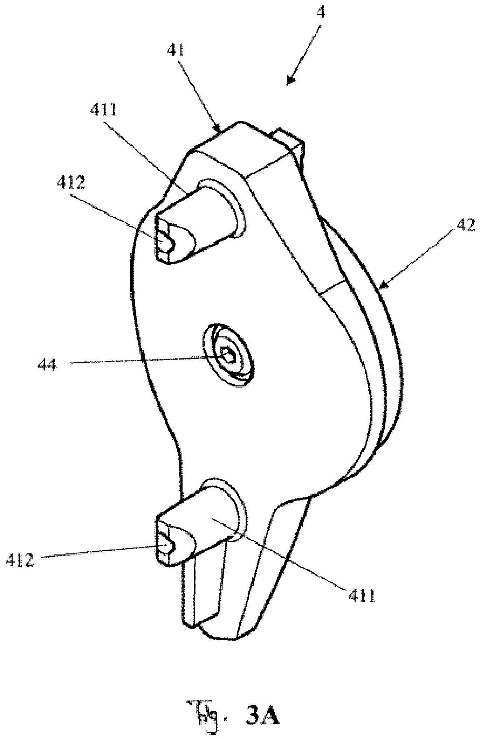

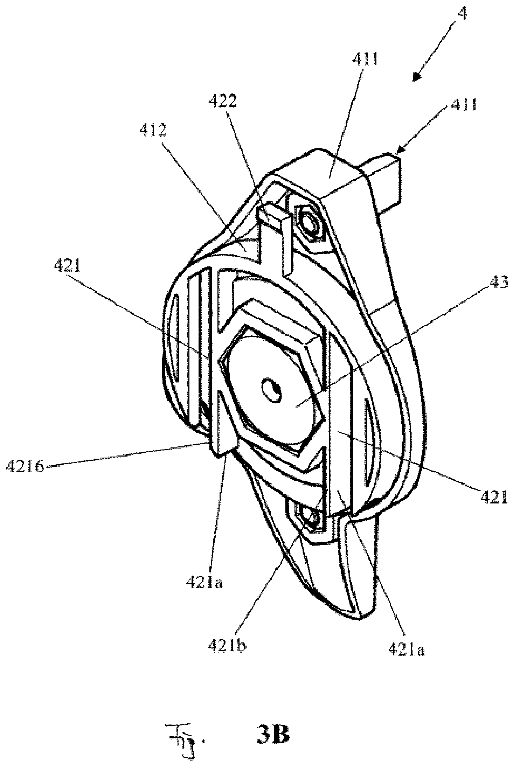

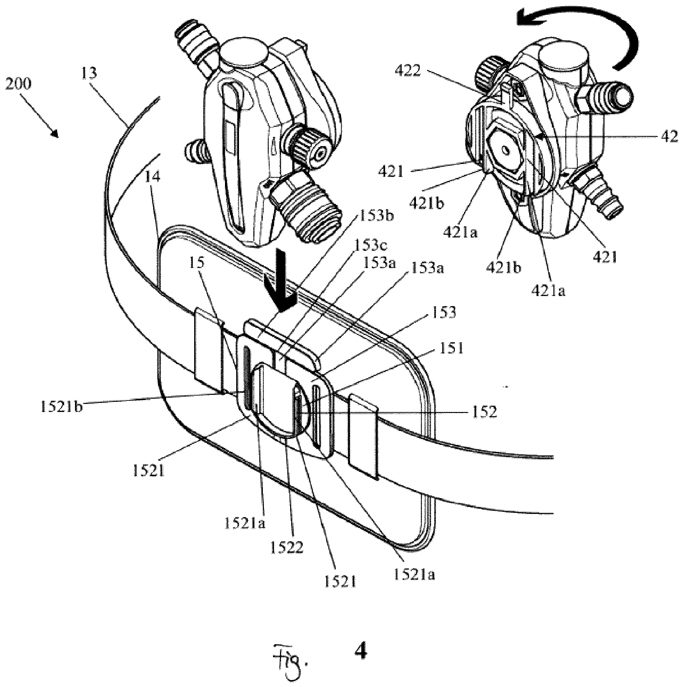

Die Fig. 3A und 3B veranschaulichen jeweils die Befestigungseinheit 4 des Aktivkohleadsorbers 100 in Vorderansicht und Rückansicht. Die Befestigungseinheit 4 umfasst Verbindungselemente 41, 42, die dazu geeignet sind, um die erste Halbschale 2 des Gehäuses des Aktivkohleadsorbers 100 mit einem Adapter 15 zu verbinden, der zu einem Hüftgurt 200 gehört (s. Fig. 4).

Wie in den Fig. 3A und 3B gezeigt, besitzt das im vorliegenden Ausführungsbeispiel im Wesentlichen oval gestaltete erste Verbindungselement 41 der Befestigungseinheit 4 zwei hohle Vorsprünge 411, die oben und unten am Verbindungselement 41 angeordnet sind und die in Richtung der ersten Halbschale 2 des Gehäuses des Aktivkohleadsorbers vorstehen. Eine Befestigungsbohrung 412 ist in jeden Vorsprung 411 eingelassen. Die erste Halbschale 2 weist entsprechende Befestigungslöcher auf, in welche die Vorsprünge 411 eingesetzt werden können. Wie in Fig. 3B weiter gezeigt, werden Schrauben 11 verwendet, welche durch die oben und unten am ersten Arm des Halters 5 befindlichen Plattensitze 51 durch dort eingelassene Befestigungslöcher 53 greifen, und anschließend durch Befestigungslöcher in der ersten Halbschale 2 und in der zweiten Halbschale 3 des Gehäuses des Aktivkohleadsorbers 100. An den Vorsprüngen 411 ist die Befestigungseinheit 4 mittels Bolzen 12 befestigt. Um eine besonders sichere Befestigung erhalten, sind Bolzensitze 413 für Schrauben oder dergleichen vorgesehen.

Wie in Fig. 3B gezeigt ist, sind zwei Gleitschlitze 421 an dem Adapterbereich 42 des Befestigungselements 4 vorgesehen. Der Adapterbereich 42 ist im Umriss kreisrund. Ein Anschlagkontakt 422 steht von der Umfangsfläche des Adapterbereichs 42 von der Oberseite des Adapterbereichs 42 ab. Zwei parallele Vorsprünge 421b, die nahe der Mitte des Adapters 42 von der Kreisfläche vorstehen, stellen jeweils die Oberseite einer Innenwand 421a für einen der beiden Gleitschlitze 421. Hierüber kann die Verbindung zwischen dem Aktivkohleadsorber 100 mit einem Hüftgurt 200 bewerkstelligt werden.

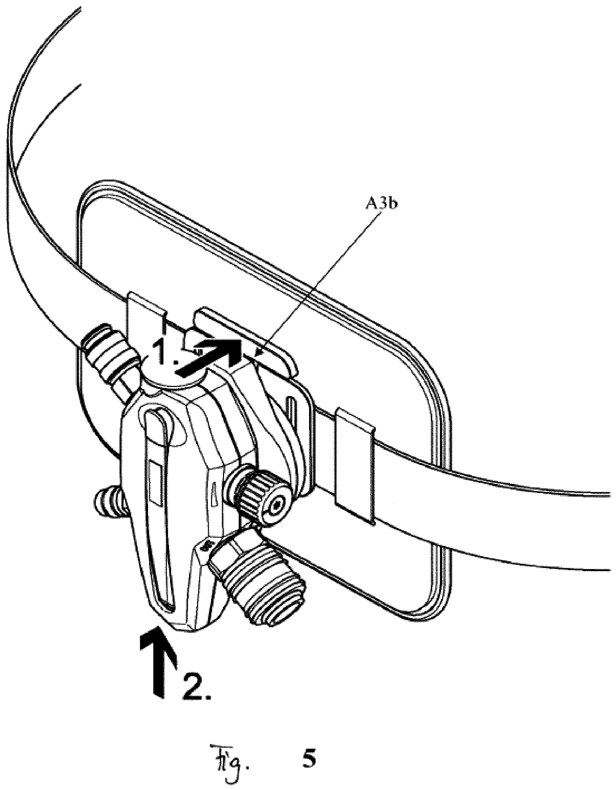

Der in den Fig. 4 und 5 angedeutete Hüftgurt 200 umfasst ein Taillenband 13, das an seiner Innenseite mit einem Polster 14 ausgestattet ist. An seiner Außenseite ist das Taillenband 13 mit einem Adapter 15 für die Befestigungseinheit 4 der Aktivkohleadsorber 100 ausgestattet.

Der Adapter 15 weist eine Trägerplatte 151, durch die Trägerplatte 151 abgestützte eine Befestigungsplatte 152 und einen Freigabemechanismus 153 auf. An dem Adapter 15 sind zwei Führungsschienen 1521 vorgesehen, die in Lage und Form auf die zwei Gleitschlitze 421 an dem Adapterbereich 42 des Befestigungselements 4 abgestimmt sind. Ein Anschlagelement 1522 verbindet die beiden Führungsschienen 1521 an ihren unteren Enden; der Anschlag 1522 und die beiden Führungsschienen 1521 bilden somit im Wesentlichen eine "U"-Form. Jede Führungsschiene 1521 umfasst eine Rippe 1521a, die von der Befestigungsplatte 152 vorsteht. Die beiden Rippen 1521a sind an der Befestigungsplatte 152 entlang der Längsrichtung des Taillenbandes 13 angeordnet und verlaufen entlang der Breitenrichtung des Taillenbandes 13 parallel zueinander. Der obere Teil jeder Rippe 1521a ist mit einem Vorsprung 1521b ausgestattet, der nach außen in der Längsrichtung des Taillenbandes vorsteht. Jeder Vorsprung 1521 b definiert an der Befestigungsplatte 152 eine Führung bzw. Klammer für die Gleitschlitze 421 an dem Adapterbereich 42 des Befestigungselements 4.

Der Freigabemechanismus 153 besitzt einen einarmigen Hebel 153a und einen Handgriff 153 b, der mit dem Hebel 153a verbunden ist. Wie in Fig. 10 gezeigt, liegt der Hebel 153a in einer Aussparung des oberen Teils der Befestigungsplatte 152. Der Hebel 153a ist aus einem relativ flexiblen Material hergestellt ist, weshalb er verformt werden kann, wenn Druck auf den Handgriff 153b ausgeübt wird. Im vorliegenden Ausführungsbeispiel ist der Hebel 153a einstückig mit der Befestigungsplatte 152 hergestellt und aus dieser Platte 152 herausgeschnitten. Der Griff 153b ist einstückig an dem oberen Ende des Hebels 153a angeformt. Die Oberfläche des Handgriff 153b ist im vorliegenden Ausführungsbeispiel größer als die Oberfläche des Hebels, wodurch eine Anschlagfläche 153c zwischen dem Handgriff 153b und dem Hebel 153a gebildet wird.

In Fig. 4 ist näher gezeigt, wie der Aktivkohleadsorber 100 über den Adapterbereich 42 der Befestigungseinheit 4 am auf den Hüftgurt 200 über dessen Adapter 15 befestigt und wieder davon gelöst werden kann. Die Führungsschienen 1521 der Befestigungsplatte 152 des Adapters 15 können nach entsprechendem Ausrichten durch einen nach unten gerichteten Druck in die Gleitschlitze 421 des Adapterbereichs 42 der Befestigungseinheit 4 eingeführt werden. Da dann die Vorsprünge 421b der Gleitschlitze 421 und die Vorsprünge 1521b der Führungsschienen 1521 einandergreifen, ist der Aktivkohleadsorber 100 sicher am Hüftgurt 200 befestigt. Das Anschlagelement 1522 an dem Adapter 15 beschränkt die Gleitbewegungen nach unten, so dass ein unerwünschtes Absinken der Aktivkohleadsorbers 100 verhindert wird. Das obere Ende des Anschlagkontakts 422 an der Befestigungseinheit 4 verhindert, dass die Anschlagfläche 153c des Freigabemechanismus 153 des Adapters 15 in unerwünschten Kontakt mit dem Aktivkohleadsorber 100 kommt.

Wie in Fig. 5 gezeigt, kann das Entfernen des Aktivkohleadsorbers 100 vom Hüftgurt 200 auf einfache Weise bewirkt werden. Durch Inkontaktbringen des Anschlagkontakts 422 an der Befestigungseinheit 4 und der Anschlagfläche 153c des Hebels 153a durch Drücken des Griffs 153b in Pfeilrichtung 1 (Fig. 4), d.h. zum Träger des Hüftgurts 200 hin, wird der Freigabemechanismus 153 ausgelöst und der Aktivkohleadsorber 100 kann durch Bewegen nach oben in Pfeilrichtung 2 (Fig. 5) abgenommen werden.

Obwohl die Ausführungsform lediglich ein Beispiel mit Gleitschlitzen 421 auf dem Adapterbereich 42 der Befestigungseinheit 4 und Führungsschienen 152 am Adapter 15 des Hüftgurts 200 beschreibt und zeigt, können andererseits Gleitschlitze an dem Adapter Führungsschienen an der Befestigungseinheit vorgesehen werden. Auch andere Arten von Gleit- oder Schiebeverbindungen oder jede andere lösbare Verbindung wie beispielsweise Klips- oder Rastverbindungen sind möglich.

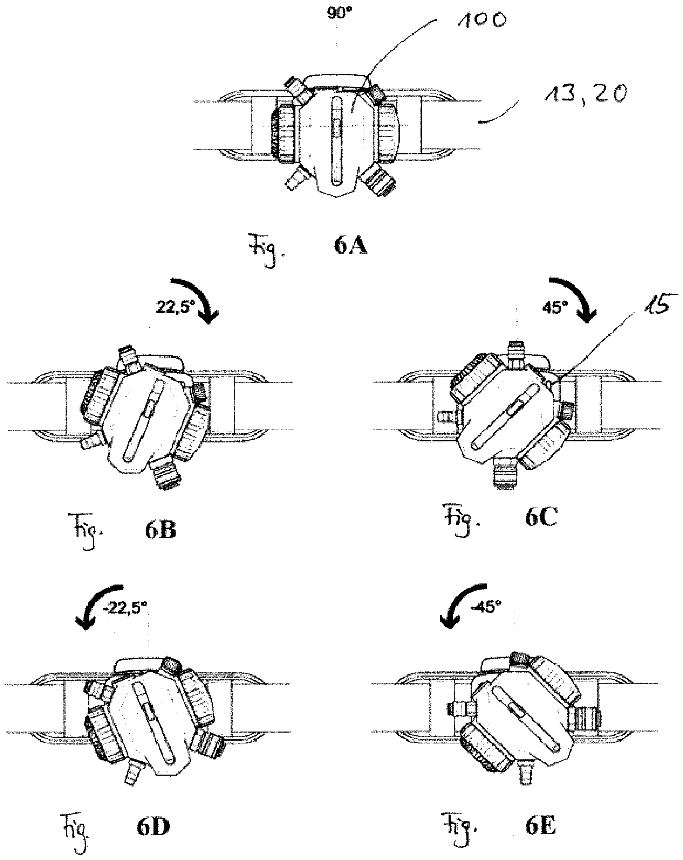

Wie in den Fig. 3A und 3B noch gezeigt ist, sind der Adapter 42 und das Verbindungselement 41 der Befestigungseinheit 4 durch eine dünne Sechskantmutter 43 und eine Schraube 44 verbunden. Da der Adapter 42 mit dem Verbindungselement 41 verbunden ist, können in Bezug zu drehen einander kann der Aktivkohleadsorber 100 (oder ein anderes an der Befestigungseinheit 4 befestigte Modul) in Bezug auf den Hüftgurt 200 verdreht werden (s. Fig. 6A bis 6E des vorherigen Ausführungsbeispiels). Das trägt zu einer weiteren Komfortsteigerung für den Bediener bei.

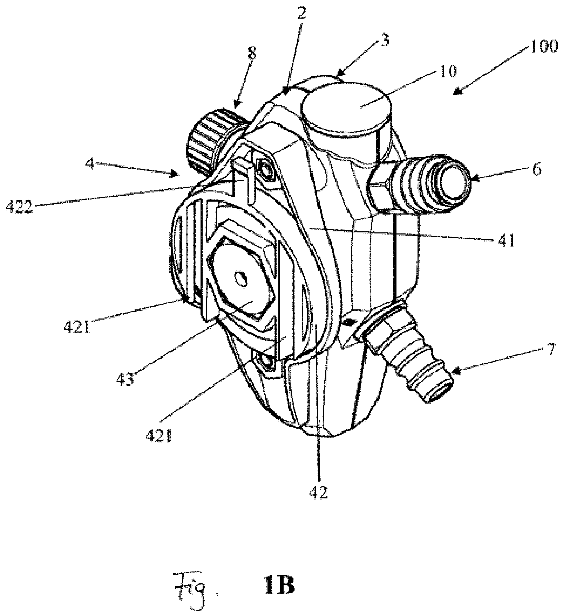

Ferner ist, wie in den Fig. 1A, 1B und 8 gezeigt, der Aktivkohleadsorber 100 mit einem Farbcodesystem-Scheibe 10 (CCS-Disc) ausgestattet. Im vorliegenden Ausführungsbeispiel ist eine kreisrunde Vertiefung auf der Oberseite des Gehäuses 2,3 des Aktivkohleadsorbers 100 eingelassen, in welche die ebenfalls kreisrunde Farbcodesystem-Scheibe 10 eingeklipst werden kann.

Verschiedene Aktivkohleadsorber 100 können mit einer Farbcodesystem-Scheibe 10 unterschiedlicher Farbe personalisiert werden. Oder es können dadurch auf einfache Weise verschiedene Aktivkohleadsorber verschiedenen Atemschutzmasken oder -hauben zugeordnet werden. Andere Befestigungsarten und Farbcodesystem-Formen sind selbstverständlich möglich.

Die Verwendung anderer Kennzeichen als Farbcodesystem-Scheiben ist selbstverständlich möglich. Mittels der Kennzeichen wird jedenfalls die Sicherheit von Atemschutzvorrichtungen weiter verbessert.

Bevorzugt sind alle Elemente oder Teilelemente des Aktivkohleadsorbers 100 aus Kunststoff hergestellt. In einer anderen möglichen Ausführungsform können die beiden Halbschalen 2,3 des Gehäuses unterschiedliche Farben haben. Wenn die Farben der Halbschalen auf die Farben des Hüftgurts bzw. des Adapters 15 abgestimmt sind, können Montagefehler nahezu ausgeschlossen werden.

In weiterer Ausgestaltung der Erfindung kann am Hüftgurt an mehreren Stellen ein Anschluss mit dem Aktivkohleadsorber erfolgen kann. Bevorzugt sollten zwei Stellen gewählt werden, die später an der linke Seite und der rechten Seite der Taille des Benutzers liegen, wenn der Hüftgurt vom Benutzer getragen wird. Dann kann der Aktivkohleadsorber von Benutzern von einer Seite zur anderen gewechselt werden, weshalb die Gurteinheit problemlos von Links- und Rechtshänder verwendet werden kann.

## Patentansprüche

1. Aktivkohleadsorber (100), wobei der Aktivkohleadsorber (100) ein Gehäuse (2, 3) zur Aufnahme einer Filterpatrone (101) besitzt, welches folgende Merkmale aufweist:
- einen Lufteinlass-Anschluss (7), um Druckluft von Luftversorgungseinheit zu empfangen;
- einen Verbinder (6) zum Anschluss an eine Atemschutzmaske oder -haube,
- eine Einheit (4, 42), die auf dem Körper bzw. auf oder an dem Gehäuse (2, 3) des Aktivkohleadsorbers (100) befestigbar ist und die in der Lage ist, um eine lösbare Verbindung, in Form einer Schiebe- oder Gleitverbindung mit einer anderen Komponente (15) einzugehen, wobei der Aktivkohleadsorber (100) mit einem Halter (5) versehen ist der wenigstens bereichsweise gegenüber dem Gehäuse (2, 3) schwenkbar befestigt ist, wobei insbesondere der Schwenkwinkel zwischen 20 ° bis 90 °, vorzugsweise bei 70° liegt, oder dass ein Verriegelungselement (52) an einem freien Ende des Halters (5) festgelegt und ein korrespondierendes Verriegelungselement am Gehäuse (2, 3) festgelegt ist, so dass das freie Ende (5) an dem Gehäuse (2, 3) verriegelt ist, wenn der Halter (5) zusammengeklappt ist und dass die Verriegelungselemente vorzugsweise Magneten sind **dadurch gekennzeichnet, dass** der Aktivkohleadsorber (100) einen Anschluss (9) zur Verbindung mit einem druckluftbetriebenen Handwerkzeug wie einer Farbspritzpistole oder dergleichen aufweist.

2. Aktivkohleadsorber (100) nach Anspruch 1, **dadurch gekennzeichnet, dass** das Gehäuse (2, 3) auf zwei einander gegenüberliegenden Seiten mit jeweils einer Öffnung (103) versehen ist, die das Einfügen der Filterpatrone (101) ermöglicht, wobei vorzugsweise die Öffnung (103) verschließbar, insbesondere durch eine Schraubkappe (2, 3) verschließbar ist.

3. Aktivkohleadsorber (100) nach einem der vorhergehenden Ansprüche, **dadurch gekennzeichnet, dass** die Filterpatrone (101) als Rohr ausgebildet ist und sich vorzugsweise Kohlepartikel im Inneren der Wände des Rohres (101) befinden und ein Luftwärmer und/oder Luftkühlermodul (102) in den Hohlraum (1011) des Rohrs (101) eingeführt ist.

4. Aktivkohleadsorber (100) nach Anspruch 2 und 3, **dadurch gekennzeichnet, dass** die Filterpatrone (101) in die eine der beiden Öffnungen (103) und das Luftwärmer und/oder Luftkühlermodul (102) in die andere der beiden Öffnungen (103) eingeführt ist.

5. Aktivkohleadsorber (100) nach einem der vorhergehenden Ansprüche, **dadurch gekennzeichnet, dass** der Adapter (42) mit einem oder mehreren Gleitschlitzen (421) gleitend mit entsprechenden Führungsschienen (1521) einer anderen Komponente (15) verbunden werden kann.

6. Aktivkohleadsorber (100) nach Anspruch 1, **dadurch gekennzeichnet, dass** das Gehäuse (2, 3) konfiguriert ist, um sich zu drehen.

7. Aktivkohleadsorber (100) nach den Ansprüchen 5 und 6, **dadurch gekennzeichnet, dass** das Gehäuse (2, 3) konfiguriert ist, um an einem Adapter (15) an mehreren Positionen von Drehwinkeln in Eingriff gebracht zu werden.

8. Aktivkohleadsorber (100) nach Anspruch 5, **dadurch gekennzeichnet, dass** ein Adapter (42) mit einem Anschlagkontakt (422) vorgesehen ist, welcher einen Anschlagkontakt (153c) eines anderen Bauteils sperren kann, nachdem der Adapter gleitend mit dem anderen Bauteil verbunden ist.

9. Aktivkohleadsorber (100) nach einem der vorhergehenden Ansprüche, **dadurch gekennzeichnet, dass** der Aktivkohleadsorber (100) mit einer Druckanzeige verbunden werden kann und/oder dass der Aktivkohleadsorber (100) ein Kennzeichnungselement (10) aufweist.

10. Aktivkohleadsorber (100) nach einem der vorhergehenden Ansprüche, in Kombination mit einer Gurteinheit (200).

11. Kombination von Aktivkohleadsorber (100) und Gurteinheit (200) nach Anspruch 10, **dadurch gekennzeichnet, dass** die Gurteinheit (200) wenigstens einen Adapter (15) aufweist, welcher mit dem Aktivkohleadsorber (100) und/oder mit einer Befestigungseinheit (4) eine lösbare Gleitverbindung eingehen kann.

12. Kombination von Aktivkohleadsorber (100) und Gurteinheit (200) nach Anspruch 11, **dadurch gekennzeichnet, dass** die Gurteinheit (200) einen Freigabemechanismus (153) für den Aktivkohleadsorber (100) und/oder für die Befestigungseinheit (4) aufweist oder dass wenigstens eine Führungsschiene (1521) und wenigstens ein Anschlagteil (1522) vorgesehen ist oder dass wenigstens eine Führungsnut und wenigstens ein Anschlagteil vorgesehen ist oder dass wenigstens eine Sicherungsfläche (153, 1521b) vorhanden ist.

13. Kombination von Aktivkohleadsorber (100) und Gurteinheit (200) nach Anspruch 12, **dadurch gekennzeichnet, dass** der Freigabemechanismus (153) ein Hebelmechanismus (5) ist, wobei insbesondere der Hebel (153a) mit dem Adapter (15) verbunden ist, und vorzugsweise der Hebel (153a) insbesondere einarmig und aus einem Bereich des Adapters (15) herausgeschnitten ist und/oder der Hebel (153a) insbesondere aus einem flexiblen Material hergestellt ist.

14. Kombination von Aktivkohleadsorber (100) und Gurteinheit (200) nach Anspruch 12, **dadurch gekennzeichnet, dass** der Freigabemechanismus (153) ein Hebelmechanismus (5) ist und dass der Hebel (153a) einen Griff (153b) aufweist und vorzugsweise zwischen dem Hebel (153a) und dem Griff (153b) wenigstens eine Anschlagfläche (153c) vorhanden ist.

15. Kombination von Aktivkohleadsorber (100) und Gurteinheit (200) nach einem der Ansprüche 11 bis 14, **dadurch gekennzeichnet, dass** durch Inkontaktbringen eines Anschlagkontakts (422) an der Befestigungseinheit (4) und der Anschlagfläche (153c) des Hebels (153a) durch Drücken des Griffs (153b) der Freigabemechanismus (153) ausgelöst und der Aktivkohleadsorber (100) von der Gurteinheit (200) abgenommen werden kann und/oder dass der Aktivkohleadsorber (100) auf der Seite mit der Befestigungseinheit (4) mit einem Polster (14) unterlegt ist und/oder dass an mehreren Stellen ein Anschluss mit dem Aktivkohleadsorber (100) erfolgen kann.

## Claims

1. Activated carbon adsorber (100), wherein the activated carbon adsorber (100) has a housing (2, 3) for receiving a filter cartridge (101), which housing has the following features:
- an air inlet port (7) to receive compressed air from an air supply unit;
- a connector (6) for connection to a respiratory mask or hood,
- a unit (4, 42) that can be fastened to the body or to or on the housing (2, 3) of the activated carbon adsorber (100) and that is capable of forming a detachable connection, in the form of a sliding or gliding connection, with another component (15), wherein the activated carbon adsorber (100) is provided with a holder (5) that is pivotably fastened at least partially relative to the housing (2, 3), wherein in particular the pivot angle is between 20° and 90°, preferably 70°, or that a locking element (52) is fixed at a free end of the holder (5) and a corresponding locking element is fixed on the housing (2, 3) such that the free end (5) is locked to the housing (2, 3) when the holder (5) is folded, and that the locking elements are preferably magnets, **characterized in that** the activated carbon adsorber (100) has a port (9) for connection to a compressed air-operated hand tool such as a paint spray gun or the like.

2. Activated carbon adsorber (100) according to claim 1,
**characterized in that** the housing (2, 3) is provided on two opposite sides with an opening (103) which allows the insertion of the filter cartridge (101), wherein preferably the opening (103) is closable, in particular closable by a screw cap (2, 3).

3. Activated carbon adsorber (100) according to either of the preceding claims, **characterized in that** the filter cartridge (101) is designed as a tube and preferably carbon particles are located inside the walls of the tube (101) and an air heater and/or air cooler module (102) is inserted into the cavity (1011) of the tube (101).

4. Activated carbon adsorber (100) according to claim 2 and 3,
**characterized in that** the filter cartridge (101) is inserted into one of the two openings (103) and the air heater and/or air cooler module (102) into the other of the two openings (103).

5. Activated carbon adsorber (100) according to any of the preceding claims, **characterized in that** the adapter (42) with one or more sliding slots (421) can be slidably connected to corresponding guide rails (1521) of another component (15).

6. Activated carbon adsorber (100) according to claim 1,
**characterized in that** the housing (2, 3) is configured to rotate.

7. Activated carbon adsorber (100) according to claims 5 and 6, **characterized in that** the housing (2, 3) is configured to engage with an adapter (15) at multiple positions of rotation angles.

8. Activated carbon adsorber (100) according to claim 5,
**characterized in that** an adapter (42) is provided with a stop contact (422) which can block a stop contact (153c) of another component after the adapter is slidably connected to the other component.

9. Activated carbon adsorber (100) according to any of the preceding claims, **characterized in that** the activated carbon adsorber (100) can be connected to a pressure gauge **and/or in that** the activated carbon adsorber (100) has a marking element (10).

10. Activated carbon adsorber (100) according to any of the preceding claims, in combination with a belt unit (200).

11. Combination of activated carbon adsorber (100) and belt unit (200) according to claim 10, **characterized in that** the belt unit (200) has at least one adapter (15) which can form a detachable sliding connection with the activated carbon adsorber (100) and/or with a fastening unit (4).

12. Combination of activated carbon adsorber (100) and belt unit (200) according to claim 11, **characterized in that** the belt unit (200) has a release mechanism (153) for the activated carbon adsorber (100) and/or for the fastening unit (4), **or in that** at least one guide rail (1521) and at least one stop part (1522) is provided, **or in that** at least one guide groove and at least one stop part is provided, **or in that** at least one securing surface (153, 1521b) is present.

13. Combination of activated carbon adsorber (100) and belt unit (200) according to claim 12, **characterized in that** the release mechanism (153) is a lever mechanism (5), wherein in particular the lever (153a) is connected to the adapter (15), and preferably the lever (153a) is in particular single-armed and cut out from a region of the adapter (15) and/or the lever (153a) is in particular made of a flexible material.

14. Combination of activated carbon adsorber (100) and belt unit (200) according to claim 12, **characterized in that** the release mechanism (153) is a lever mechanism (5) **and in that** the lever (153a) has a handle (153b) and preferably between the lever (153a) and the handle (153b) at least one stop surface (153c) is present.

15. Combination of activated carbon adsorber (100) and belt unit (200) according to any of claims 11 to 14, **characterized in that** by bringing a stop contact (422) on the fastening unit (4) and the stop surface (153c) of the lever (153a) into contact by pressing the handle (153b) the release mechanism (153) is triggered and the activated carbon adsorber (100) can be removed from the belt unit (200) **and/or in that** the activated carbon adsorber (100) is supported on the side with the fastening unit (4) by a pad (14) **and/or in that** a connection with the activated carbon adsorber (100) can be made at multiple points.

## Revendications

1. Adsorbeur à charbon actif (100), dans lequel l'adsorbeur à charbon actif (100) présente un boîtier (2, 3) destiné à recevoir une cartouche filtrante (101), lequel adsorbeur à charbon actif présente les caractéristiques suivantes :
- un raccord d'admission d'air (7) pour recevoir l'air comprimé provenant de l'unité d'alimentation en air ;
- un connecteur (6) destiné à être raccordé à un masque respiratoire ou à une cagoule respiratoire,
- une unité (4, 42) pouvant être fixée sur le corps ou sur le ou au niveau du boîtier (2, 3) de l'adsorbeur à charbon actif (100) et qui est capable de former, avec un autre composant (15), une liaison amovible sous la forme d'une liaison coulissante ou glissante, dans lequel l'adsorbeur à charbon actif (100) est muni d'un support (5) qui est fixé de manière pivotante, au moins dans certaines zones, par rapport au boîtier (2, 3), dans lequel l'angle de pivotement en particulier est compris entre 20° et 90°, de préférence de 70°, ou un élément de verrouillage (52) est fixé à une extrémité libre du support (5) et un élément de verrouillage correspondant est fixé au boîtier (2, 3), de sorte que l'extrémité libre (5) soit verrouillée sur le boîtier (2, 3) lorsque le support (5) est replié, et les éléments de verrouillage sont de préférence des aimants, **caractérisé en ce que** l'adsorbeur à charbon actif (100) présente un raccord (9) destiné à être relié à un outil à main actionné par air comprimé tel qu'un pistolet à peinture ou un objet similaire.

2. Adsorbeur à charbon actif (100) selon la revendication 1,
**caractérisé en ce que** le boîtier (2, 3) est pourvu, sur deux côtés opposés, d'une ouverture (103) permettant l'insertion de la cartouche filtrante (101), dans lequel l'ouverture (103) peut de préférence être fermée, en particulier à l'aide d'un bouchon à vis (2, 3).

3. Adsorbeur à charbon actif (100) selon l'une des revendications précédentes, **caractérisé en ce que** la cartouche filtrante (101) est réalisée sous la forme d'un tube et les particules de charbon se trouvent de préférence à l'intérieur des parois du tube (101) et un module de réchauffage d'air et/ou de refroidissement d'air (102) est inséré dans la cavité (1011) du tube (101).

4. Adsorbeur à charbon actif (100) selon les revendications 2 et 3,
**caractérisé en ce que** la cartouche filtrante (101) est insérée dans l'une des deux ouvertures (103) et le module de réchauffage d'air et/ou de refroidissement d'air (102) est inséré dans l'autre des deux ouvertures (103).

5. Adsorbeur à charbon actif (100) selon l'une des revendications précédentes, **caractérisé en ce que** l'adaptateur (42) peut être relié de manière coulissante, grâce à une ou plusieurs fentes de glissement (421), aux rails de guidage (1521) correspondants d'un autre composant (15).

6. Adsorbeur à charbon actif (100) selon la revendication 1,
**caractérisé en ce que** le boîtier (2, 3) est conçu pour tourner.

7. Adsorbeur à charbon actif (100) selon les revendications 5 et 6, **caractérisé en ce que** le boîtier (2, 3) est conçu pour être mis en prise avec un adaptateur (15) dans plusieurs positions d'angles de rotation.

8. Adsorbeur à charbon actif (100) selon la revendication 5,
**caractérisé en ce qu'**il est prévu un adaptateur (42) comportant un contact de butée (422) qui peut bloquer un contact de butée (153c) d'un autre composant après que l'adaptateur a été relié par glissement à cet autre composant.

9. Adsorbeur à charbon actif (100) selon l'une des revendications précédentes, **caractérisé en ce que** l'adsorbeur à charbon actif (100) peut être relié à un indicateur de pression et/ou **en ce que** l'adsorbeur à charbon actif (100) présente un élément d'identification (10).

10. Adsorbeur à charbon actif (100) selon l'une des revendications précédentes, associé à un ensemble sangle (200).

11. Combinaison d'un adsorbeur à charbon actif (100) et d'un ensemble sangle (200) selon la revendication 10, **caractérisée en ce que** l'ensemble sangle (200) présente au moins un adaptateur (15) qui peut former une liaison glissante amovible avec l'adsorbeur à charbon actif (100) et/ou avec une unité de fixation (4).

12. Combinaison d'un adsorbeur à charbon actif (100) et d'un ensemble sangle (200) selon la revendication 11, **caractérisée en ce que** l'ensemble sangle (200) présente un mécanisme de libération (153) pour l'adsorbeur à charbon actif (100) et/ou pour l'unité de fixation (4), **ou en ce qu'**au moins un rail de guidage (1521) et au moins un élément de butée (1522) sont prévus, **ou en ce qu'**au moins une rainure de guidage et au moins un élément de butée sont prévus, **ou en ce qu'**il existe au moins une surface de blocage (153, 1521b).

13. Combinaison d'un adsorbeur à charbon actif (100) et d'un ensemble sangle (200) selon la revendication 12, **caractérisée en ce que** le mécanisme de libération (153) est un mécanisme à levier (5), dans laquelle le levier (153a) est en particulier relié à l'adaptateur (15), et de préférence, le levier (153a) est en particulier à bras unique et séparé d'une zone de l'adaptateur (15) et/ou le levier (153a) est en particulier fabriqué à partir d'un matériau souple.

14. Combinaison d'un adsorbeur à charbon actif (100) et d'un ensemble sangle (200) selon la revendication 12, **caractérisée en ce que** le mécanisme de libération (153) est un mécanisme à levier (5), **et en ce que** le levier (153a) présente une poignée (153b) et qu'il existe de préférence au moins une surface de butée (153c) entre le levier (153a) et la poignée (153b).

15. Combinaison d'un adsorbeur à charbon actif (100) et d'un ensemble sangle (200) selon l'une des revendications 11 à 14, **caractérisée en ce que** le mécanisme de libération (153) est déclenché par la mise en contact d'un contact de butée (422) situé sur l'unité de fixation (4) et de la surface de butée (153c) du levier (153a) en appuyant sur la poignée (153b), et l'adsorbeur à charbon actif (100) peut être retiré de l'ensemble sangle (200) **et/ou en ce que** l'adsorbeur à charbon actif (100) est renforcé, du côté de l'unité de fixation (4), par un rembourrage (14) **et/ou en ce qu'**un raccordement à l'adsorbeur à charbon actif (100) peut s'effectuer à plusieurs endroits.
